# EUROPÄISCHE PATENTSCHRIFT

(11) **EP 0 891 915 B1**
(45) Veröffentlichungstag und Bekanntmachung des Hinweises auf die Patenterteilung: **05.06.2002**
(21) Anmeldenummer: 98112530.5
(22) Anmeldetag: 07.07.1998
(51) Int. Cl.: B62D 21/11

(54) **Hilfsrahmen für Kraftfahrzeuge**
Subframe for motor vehicles
Châssis auxiliaire pour véhicules automobiles

(30) Priorität: 16.07.1997 DE 19730404
(43) Veröffentlichungstag der Anmeldung: 20.01.1999
(73) Patentinhaber: DaimlerChrysler AG, 70567 Stuttgart (DE)
(72) Erfinder: Bortz, Joachim, 73257 Köngen (DE); Brühl, Hubert, 73550 Waldstetten (DE); Mayerhofer, Martin, 72768 Reutlingen (DE); Schwer, Harald, 89079 Ulm (DE)

(56) Entgegenhaltungen:
- WO-A-90/05083
- DE-A- 3 927 987
- DE-A- 4 408 573
- DE-C- 3 927 924
- DE-U- 29 508 175
- US-A- 3 940 176
- US-A- 5 267 630
- US-A- 5 573 274

## Beschreibung

Die Erfindung betrifft einen Hilfsrahmen für Kraftfahrzeuge, insbesondere für Vorderachsen von Personenkraftwagen gemäß dem Oberbegriff des Anspruches 1. Ein solcher Hilfsrahmen für Hinterachsen wird in DE-A-4 408 573 offenbart.

Hilfsrahmen für Kraftfahrzeuge finden insbesondere für Personenkraftwagen, aber auch für mit Personenkraftwagen im Aufbau ähnlichen Fahrzeugen bis hin zu Geländewagen und leichten Lieferfahrzeugen Verwendung und sind als mit dem Rahmen oder dem Aufbau des Fahrzeuges über elastische Anlenkungen verbundene Fahrschemel oder auch als sogenannte Integralträger bekannt, bei denen der Hilfsrahmen mit dem Rahmen oder dem Aufbau des Fahrzeuges, insbesondere Längstragelementen des Fahrzeuges, wie Vorbauträgem oder dergleichen starr verbunden ist. Sowohl in der Ausgestaltung als Fahrschemel wie auch in der Ausgestaltung als Integralträger sind die Hilfsrahmen teilweise Montagerahmen, an denen die Radführungsglieder, gegebenenfalls einschließlich Radfederung, angelenkt bzw. abgestützt sind und/oder die als Träger für das Lenkgetriebe und/oder den Stabilisator dienen. Fallweise sind solche Hilfsrahmen auch Motorträger, so daß solche Hilfsrahmen in Berücksichtigung der auf diese im Normalbetrieb einwirkenden Kräfte recht stabil ausgeführt werden müssen.

Hierbei sind die Hilfsrahmen üblicherweise aufgebaut aus zwei Seitenteilen, die über vordere und hintere, elastische oder starre Anlenkungen lösbar mit Aufbau- oder Rahmenlängsträgem verbunden sind und die über Querelemente gegeneinander abgestützt sind, wobei der Hilfsrahmen üblicherweise eine in sich geschlossene Einheit bildet. In der Praxis sind solche Hilfsrahmen sowohl in Verbindung mit Vorderachsen wie auch mit Hinterachsen von Personenkraftwagen eingesetzt, wobei sich insbesondere in Verbindung mit Vorderachsen einander widerstreitende Anforderungen an den Hilfsrahmen und an die Vorbaugestaltung des Fahrzeuges ergeben; denn im Rahmen der Vorbaugestaltung wird aus Sicherheitsgründen häufig eine gezielte Deformierbarkeit der dem Rahmen oder dem Aufbau zugehörigen Vorbaulängsträger gefordert, wobei die entsprechenden Deformationszonen Teilbereichen der rahmen- oder aufbauseitigen Längsträger zugehören, in denen an diesen Trägern die Seitenteile des Hilfsrahmens befestigt sind. Insbesondere bei Integralträgern, also bei starrer Verbindung des Hilfsrahmens mit den entsprechenden Rahmen - oder Aufbauträgern können sich dabei durch die Seitenteile des Hilfsrahmens zusätzliche Abstützungen ergeben, die einem angestrebten Deformationsverhalten der Rahmen- oder Aufbaulängsträger entgegenstehen, zumal über die Querelemente des Hilfsrahmens eine entsprechende Deformation desselben in Fahrzeuglängsrichtung häufig zusätzlich behindert wird.

Durch die Erfindung soll demgegenüber eine Lösung aufgezeigt werden, die sowohl hinsichtlich des Crashverhaltens unter Sicherheitsgesichtspunkten wie auch hinsichtlich der notwendigen Betriebsfestigkeit und Steifigkeit befriedigt und durch die zudem günstige Montagevoraussetzungen geschaffen werden.

Erreicht wird dies durch die Merkmale des Anspruches 1. Dadurch, daß die Seitenteile in ihrem Deformationsverhalten - bei Crash unter dem Einfluß von in Fahrzeuglängsrichtung wirkenden Kräften - zu den sie tragenden Aufbau- oder Rahmenlängsträgem des Fahrzeuges entkoppelt sind, ist es zunächst möglich, die Hilfsrahmenstruktur im Crashfall auch bei aus Sicherheitsgründen stattfindender Verformung bzw. Faltung der Aufbau- oder Rahmenlängsträger zu erhalten, dadurch, daß die Seitenteile ebenfalls gezielt verformbar ausgebildet werden. Da die Verformungszone der Aufbau- oder Rahmenlängsträger bei herkömmlichen Fahrzeugkonstruktionen im Überdeckungsbereich zu den Seitenteilen liegt, erweist es sich im Hinblick auf eine Verformbarkeit der Seitenteile unter Längskräften im Crashfalle als zweckmäßig, diese auszukröpfen, in Abhängigkeit von ihrer jeweiligen Verbindung mit dem Aufbau- bzw. Rahmenlängsträger nach oben oder unten oder auch zur Fahrzeugmitte hin.

Ein bezogen auf den Chrashfall gewünschtes Deformationsverhalten der Seitenteile, quasi in Analogie zur Verformung der Aufbau- oder Rahmenlängsträger, darf keine unzulässige Verringerung der Betriebsfestigkeit und Betriebssteifigkeit des Hilfsrahmens zur Folge haben, wenn über diesen nach wie vor eine exakte Radführung gewährleistet werden soll. Um dies zu erreichen ist der Hilfsrahmen erfindungsgemäß quasi als offener Kasten gestaltet, dessen Seiten durch die Seitenteile gebildet sind und dessen die Seitenteile verbindende Querelemente oben durch einen Querträger und unten durch ein flächiges, insbesondere plattenförmiges Stützelement gebildet ist. Ist hierbei, einer bevorzugten Lösung entsprechend, nur ein oberes Querelement, also nur ein Querträger vorgesehen, so ist auch bei Stauchvorgängen unter Längskrafteinfluß beim Frontalcrash keine Verblockung zu befürchten, insbesondere wenn der Querträger als offenes Hohlprofil ausgebildet ist. Das untere, plattenförmige Querelement kann, analog zu den Seitenteilen, bezogen auf Längskräfte im Crashfall weich ausgebildet sein, andererseits aber, soweit erforderlich, durch entsprechende Strukturierung oder Abstützung die notwendige Steifigkeit in Querrichtung aufweisen, um Betriebskräfte beim Lenken und Bremsen zwischen den Seitenteilen zu übertragen, wobei durch die Anlenkung des plattenförmigen Querelementes im Bereich der Anlenkungen der unteren Radführungsglieder eine günstige Kraftübertragung und Kraftaufnahme gewährleistet ist. Insbesondere bei lösbarer Befestigung des plattenförmigen Querelementes an den Seitenteilen ist der Hilfsrahmen auch in günstiger Weise als Montagerahmen nutzbar, der bei einer Achse mit gelenkten Rädern, insbesondere einer Vorderachse zweckmäßigerweise das Lenkgetriebe und das insbesondere zylindrische Gehäuse für auf die Spurstangen wirkende Lenkstangen enthält, wobei das Lenkstangengehäuse gleichzeitig der Aussteifung des flächigen Querelementes in Fahrzeugquerrichtung dienen kann. In entsprechender Weise kann auch der Stabilisator mit dem Hilfsrahmen verbunden werden, und dadurch zur Aussteifung in Bezug auf Querkräfte beitragen. Die plattenförmige Abdeckung, die durch das untere Querelement erreicht wird, dient gleichzeitig dem Schutz der Aggregate.

Weitere Einzelheiten und Merkmale der Erfindung ergeben sich aus den Ansprüchen. Ferner wird die Erfindung anhand der Zeichnungen noch näher erläutert, die eine stark schematisierte Prinzipdarstellung eines erfindungsgemäßen Hilfsrahmens zeigen. Im Einzelnen sind dargestellt, in
- Figur 1: die linke Seite eines spiegelbildlich aufgebauten Hilfsrahmens in einer Draufsicht, und
- Figur 2: eine Seitenansicht der Darstellung gemäß Figur 1, wobei die Verbindung des Hilfsrahmens mit dem entsprechenden Aufbau- oder Rahmenlängsträger des Fahrzeuges zeigt.

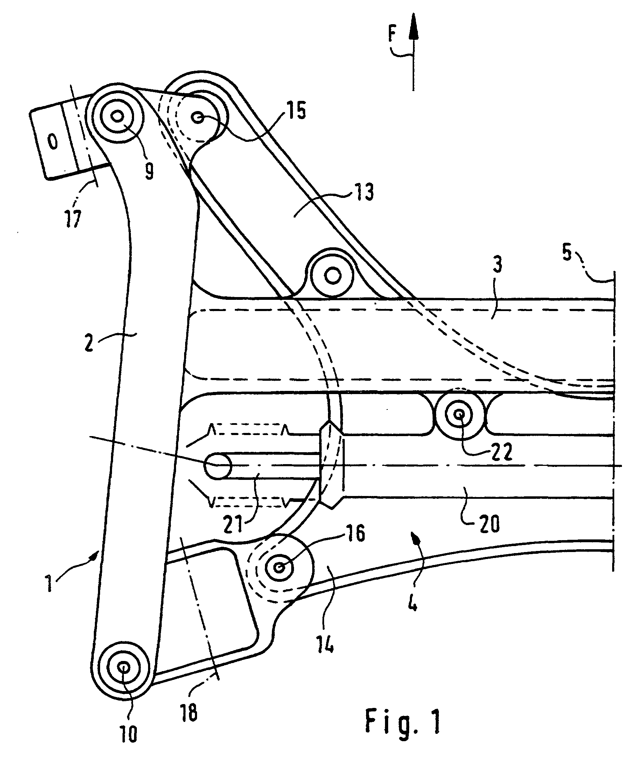

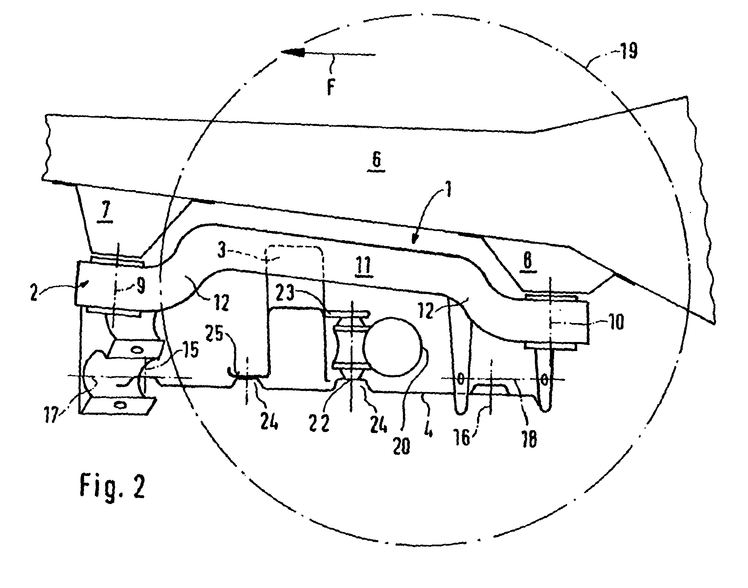

Der in den Figuren dargestellte Hilfsrahmen für Kraftfahrzeuge ist insgesamt mit 1 bezeichnet und besteht aus Seitenteilen 2 und diese verbindenden Querelementen 3 und 4, die in Höhenrichtung gegeneinander versetzt sind und von denen das Querelement 3 durch einen oberen Querträger und das Querelement 4 durch ein unteres, flächiges, insbesondere plattenförmiges Element gebildet ist. Von dem Hilfsrahmen 1 ist in Figur 1 nur die bezogen auf die Vorwärtsfahrtrichtung F linke Seite dargestellt, da der Hilfsrahmen 1 zur Fahrzeuglängsmittelebene 5 in seinen wesentlichen Elementen symmetrisch ausgebildet ist. Zur Längsmittelebene 5, und damit auch zur Vorwärtsfahrtrichtung F verlaufen die Querelemente 3 und 4 in ihrer Erstreckung senkrecht, während die Seitenteile 2 im wesentlichen in Fahrzeuglängsrichtung und damit im wesentlichen parallel zur Fahrzeuglängsmittelebene 5 liegen und, wie Figur 2 zeigt, an Längsträgern 6 befestigt sind, die als seitliche Vorbauträger dem Rahmen oder dem Aufbau des nicht weiter dargestellten Fahrzeuges zugehören und die nach hinten im Bereich der Stimwand des Fahrzeuges in die Fahrzeugschweller übergehen, während sie im bezogen auf die Fahrtrichtung F vorderen Endbereich auf die Front des Fahrzeuges auslaufen und beispielsweise den Fahrzeugstoßfänger tragen.

Die Seitenansicht gemäß Figur 2, die teilweise mit einer Schnittdarstellung kombiniert ist, zeigt, daß die Seitenteile 2 an Konsolen 7, 8 der Längsträger 6 angelenkt sind, die von den Längsträgem 6 nach unten ragen, so daß zwischen den Konsolen 7, 8, d.h. zwischen dem Längsträger 6 und der Befestigungsebene der Seitenteile 2 an den Konsolen 7, 8 ein Freiraum verbleibt. Die Seitenteile 2, die sich in Fahrzeuglängsrichtung erstrecken, sind im Bereich ihrer freien Enden beispielsweise durch Verschraubung an den Konsolen 7, 8 befestigt - schematisch dargestellte Schraubenverbindungen 9, 10 - und sie sind zwischen den Schraubverbindungen 9, 10 in den zwischen den Konsolen 7 und 8 liegenden Freiraum nach oben ausgekröpft. Bezogen auf Längskräfte, wie sie beispielsweise bei einem Frontalcrash auftreten und für die Längsträger 6 durch Längsstauchung zu einem ziehharmonikaartigen Verfalten führen, bilden die Seitenteile 2 quasi Aussteifungen des Längsträgers 6. Diesem bezogen auf ein gezieltes Stauchen der Längsträger 6 unerwünschten Effekt wird durch die Auskröpfung der Seitenteile 2 in ihrem längsmittleren Bereich begegnet, wobei der ausgekröpfte Bereich der Seitenteile mit 11 bezeichnet ist und bezogen auf die angesprochenen Längskräfte zu einer Schwächung der Seitenteile 2 führt, derart, daß trotz der durch die Seitenteile 2 bedingten Aussteifung noch eine gezielte Verformung der Längsträger 6 möglich ist. Durch die Auskröpfung 11, die abweichend vom gezeigten auch nach unten oder seitlich, insbesondere zur Fahrzeugmitte hin erfolgen könnte, können die Längsträger 6 unter Verstärkung der Verformung im Bereich der Auskröpfung gestaucht werden, und zwar unter Beibehalt der Gesamtstruktur des Hilfsrahmens 1, wobei die durch die Auskröpfung 11 bedingte Schwächung in Bezug auf Längskräfte auch sicherstellt, daß das insgesamt angestrebte Crashverhalten noch erhalten bleibt.

Da bei einem Zusammenschieben des Längsträgers 6 im Bereich zwischen den Schraubverbindungen 9 und 10 die Übergangsbereiche 12 der Auskröpfung steiler angestellt werden, ist der Verformungsgrad im mittleren Bereich der Auskröpfung 11 verhältnismäßig klein, mit der Folge, daß ein im mittleren Bereich in der Auskröpfung angeordnetes Querelement 3, das durch einen Träger mit offenem Hohlprofil gebildet ist, seine Lage im wesentlichen beibehält.

Dies ungeachtet dessen, daß das durch den Träger gebildete Querelement 3 mit dem in Höhenrichtung darunter liegenden plattenförmigen Querelement 4 verbunden ist, das seinerseits, wie Figuren 1 und 2 veranschaulichen, bei flächiger Erstreckung über gegen die Seitenteile 2 auslaufende Arme 13, 14 in den Endbereichen der Seitenteile 2 über Anlenkungen 15, 16 beispielsweise Verschraubungen, mit diesen verbunden ist. Die Anlenkungen 15, 16 liegen dabei im Bereich der den Seitenteilen 2 zugeordneten karrosserieseitigen Lager 17 bzw. 18 von Radführungsgliedern, die durch die nicht weiter gezeigten unteren Lenker einer Radführung gebildet sind, deren oberes oder obere Radführungsglieder höhenversetzt gegen die Seitenteile 2 abgestützt sind, wobei als obere Radführungsglieder beispielsweise ebenfalls Radführungslenker in Frage kommen, die an einer von den Seitenteilen 2 nach oben ragenden Konsole in nicht weiter dargestellter Weise gelagert sind. Da die Anlenkungen 15, 16 quasi den Lagern 17, 18 der unteren Radführungsglieder unmittelbar benachbart sind, können die in den Lagern 17, 18 aufzunehmenden Betriebskräfte, z.B. Lenk- und Bremskräfte vorteilhaft von dem unteren Querelement 4 aufgenommen und über dieses auf die einander gegenüberliegenden, jeweils mit den Fahrzeuglängsträgern 6 verbundenen Seitenteile 2 aufgeteilt werden. Durch entsprechende Konturierungen des Querelementes 4, beispielsweise entsprechende Randgestaltung desselben und/oder in Fahrzeugquerrichtung verlaufende Verrippungen ist dabei sichergestellt, daß das Querelement 4 die notwendige Verformungssteifigkeit im Hinblick auf die angesprochenen dynamischen Querkräfte aufweist, bezogen auf in Fahrzeuglängsrichtung wirkende Kräfte, also beispielsweise crashbedingte Kräfte aber nachgiebig bleibt. Dies gilt sowohl für den Bereich der Arme 13, 14, die bei einer entsprechenden Stauchung der Seitenteile 2 in Längsrichtung aufeinander zuwandern können, wie auch für den mittleren, der Fahrzeuglängsmittelebene 5 benachbarten Bereich des Querelementes 4, da das Querelement 4 gegen die Fahrzeuglängsmittelebene 5 zu stark tailliert ist und die Arme 13, 14 an diesen taillierten Bereich anschließend auseinander laufen, so daß sich trotz des im Bereich der Fahrzeuglängsmittelebene schmalen Mittelbereiches eine große Stützbasis erreichen läßt.

Das untere Querelement 4 ist dabei in seinem taillierten Mittelbereich bezogen auf die Mitte zwischen den Anlenkungen 15, 16 in Fahrzeuglängsrichtung nach hinten versetzt, so daß die bezogen auf die Längserstreckung des Fahrzeuges rückwärtige Begrenzung des unteren Querelementes 4 nahe der Verbindungslinie der einander gegenüberliegenden, hinteren Anlenkungen 16 liegt, während die vordere Begrenzung des unteren Querelementes 4 im längsmittigen, taillierten Bereich etwa in einer Querebene liegt, die bezogen auf die Längsrichtung mittig zwischen den Anlenkungen 15 und 16 liegt. Damit fällt die vordere Begrenzung des unteren Querelementes 4 im taillierten, der Fahrzeuglängsmittelebene 5 benachbarten Bereich in der Draufsicht gemäß Figur 1 etwa mit der bezogen auf die Fahrzeuglängsrichtung rückwärtigen Kante des oberen, als Träger ausgebildeten Querelementes 3 zusammen, wobei dieses obere Querelement 3, wie Figur 2 zeigt, ausgehend von den ausgekröpften Bereichen der Seitenteile 2 in Richtung auf die Fahrzeuglängsmittelebene 5 nach unten durchgewölbt ist. Benachbart zu dem das obere Querelement 3 bildenden Träger erstreckt sich als Teil der Lenkung für die mit den Seitenteilen 2 über hier nicht dargestellte Radführungsglieder geführten Räder - in Figur 2 mit 19 angedeutet - eine Führung 20 für Lenkstangen 21, die über hier nicht gezeigte und an die Lenkstangen anschließende Spurstangen und weitere Verbindungsteile auf die Räder 19 wirken. Die Lenkstangen 21 sind über ein hier nicht gezeigtes und mit der Führung 20 verbundenes Lenkgetriebe in Fahrzeugquerrichtung verstellbar. Als Führung 20 dient eine beispielsweise zylindrisches Lenkstangengehäuse, und es ist dieses Lenkstangengehäuse, wie insbesondere aus Figur 2 ersichtlich, sowohl gegenüber dem oberen, als Träger ausgebildeten Querelement 3 wie auch gegenüber dem unteren, plattenförmigen Querelement 4 abgestützt, wobei diese Abstützung in Figur 2 schematisch bei 22 angedeutet ist und bevorzugt durch ein elastisches Abstützelement gebildet ist, das seinerseits mit einem Ausleger 23 des Trägers als oberem Querelement 3 und dem plattenförmigen Querelement 4 verschraubt ist. Dadurch bilden zumindest Teile der Lenkung, hier die Halterung für die Lenkstangenführung 20 und das nicht dargestellte Lenkgetriebe eine Verbindung zwischen oberem und unterem Querelement, die in Fahrzeugquerrichtung zu einer Aussteifung des unteren Querelementes 4 führt, so daß dieses bezogen auf Querkräfte auch bei verhältnismäßig dünnwandiger Ausgestaltung die notwendige Steifigkeit erhält. Hierzu trägt auch bei, daß das untere Querelement, wie im Bereich der Abstützung beispielhaft angedeutet, als Blechbauteil durch entsprechende Verrippung oder Versickung mit Verlauf quer zur Fahrtrichtung eine erhebliche Aussteifung erfährt. Solche Rippen oder Sicken sind mit 24 bezeichnet, und es ist eine solche Verrippung oder Versickung 24 auch in dem bezogen auf die Fahrtrichtung F vor dem Querelement 3 liegenden Bereich des Querelementes 4 vorgesehen, in dem das Querelement 3 über einen abgewinkelten Schenkelbereich 25 mit dem Querelement 4 verbunden ist.

Wird, wie vorstehend bereits erwähnt, im Crashfalle der Längsträger 6 gestaucht, so werden die Seitenteile durch Vergrößerung des Kröpfungswinkels im Übergangsbereich 12 verkürzt, behalten aber bezüglich des ausgekröpften Bereiches 11 im wesentlichen ihre Lage bei, mit der Folge, daß die Radführung einschließlich der Lenkung funktional erhalten bleibt. Durch den Höhenversatz von oberem und unterem Querelement 3 bzw. 4 ist dabei verhindert, daß diese Teile, auch bei einem Verschieben in Fahrtrichtung gegeneinander auf Block gehen können, andererseits aber erreicht, daß für den Hilfsrahmen ein im Querschnitt im wesentlichen kastenförmiger Aufbau gegeben ist, der große Stabilität bei gewichtsmäßig leichter Ausführung mit sich bringt. Hierzu trägt auch die wechselseitige Abstützung von oberem und unterem Querelement 3 bzw. 4 über die Teile der Lenkung bei, wobei die Integration dieser Teile in den Hilfsrahmen 1 in Verbindung mit der Anlenkung der Radführungsglieder am Hilfsrahmen 1 den Vorteil bietet, den Hilfsrahmen 1 als Montageeinheit zu nutzen, so daß Radaufhängung und Lenkung vormontiert über die Seitenteile 2 an den Längsträgern 6 des Aufbaus angebracht werden können. Eine solche Nutzung des Hilfsrahmens als Montageeinheit ist auch vorteilhaft im Hinblick auf die Positionierung aller Anlenkpunkte der Radführung unabhängig von Karrosserietoleranzen. In Ausgestaltung der Erfindung erstreckt sich bevorzugt in Fahrtrichtung vor dem oberen Querelement 3 und benachbart zu diesem in hier nicht gezeigter Weise auch der üblicherweise verwendete Drehstabstabilisator, wobei dieser im Bereich seines Rückens benachbart zu den seitlichen Stabilisatorarmen an den Seitenteilen 2 drehbar gelagert ist. Auch der Stabilisator bildet bei dieser Anordnung für den Hilfsrahmen ein Queraussteifüngsglied und ermöglicht dadurch eine vergleichsweise schwache Dimensionierung des Trägers 3, wobei Stabilisator, Querelement 3 und Lenkstangenführung 20 eine sehr kompakte Baueinheit bilden, die aufgrund der Profilierung des Querelementes 3 bei Frontalcrash dennoch in Fahrzeuglängsrichtung zusammenzudrücken ist, dabei aber auch über die Fahrzeugbreite eine günstige Kraftverteilung zur Folge hat.

Über das erfindungsgemäß vorgesehene, flächige, insbesondere plattenförmige untere Querelement 4 ergibt sich auch eine Abschirmung der vom Hilfsrahmen getragenen Aggregate, insbesondere im Sinne eines Schlagschutzes.

## Patentansprüche

1. Hilfsrahmen (1) für Kraftfahrzeuge, insbesondere für Vorderachsen von Personenkraftwagen, mit unabhängiger Radaufhängung und über obere und untere Radführungsglieder geführten Rädern (19), bei der den oberen und unteren Radführungsgliedern obere und untere Lager an und im Bereich von in Fahrzeuglängsrichtung verlaufenden Seitenteilen (2) des Hilfsrahmens (1) zugeordnet sind, die bei gekrümmtem Verlauf im Bereich ihrer Endabschnitte lösbar gegenüber Aufbau oder Rahmen des Fahrzeuges zu befestigen sowie mit nach unten ragenden, Lager (17, 18) für die unteren Radführungsglieder tragenden Konsolen versehen sind, welche über Querelemente verbunden sind, von denen eines einen oberen Querträger (3) und eines eine untere Querversteifung (4) bildet, die bei plattenförmig-flächiger Ausbildung in Höhe der Lager (17, 18) der unteren Radführungsglieder zwischen den diese Lager (17, 18) tragenden Konsolen angeordnet ist,
**dadurch gekennzeichnet,**
**daß** die Seitenteile (2) ein gegenüber ihren Endabschnitten über Verformungsbereiche bildende Auskröpfungen (12) verbundenes Mittelstück (11) aufweisen und unter Längskrafteinfluß verkürzbar sind, daß der obere Querträger (3) im Bereich der Mittelstücke (11) mit den Seitenteilen (2) verbunden ist und daß die untere Querversteifung (4) einen in Draufsicht gegen die Fahrzeuglängsmittelebene (5) taillierten Mittelbereich und anschließend an diesen gegen die Endabschnitte der Seitenteile (2) auseinanderlaufende und mit diesen verbundene Arme (13, 14) aufweist.

2. Hilfsrahmen nach Anspruch 1
**dadurch gekennzeichnet,**
**daß** die Arme (13, 14) benachbart zu den Lagern (17, 18) der unteren Radführungsglieder an den den Endabschnitten zugeordneten Konsolen der Seitenteile (2) befestigt sind.

3. Hilfsrahmen nach Anspruch 1 oder 2,
**dadurch gekennzeichnet,**
**daß** die Konsolen an ihrer von den Radführungsgliedern abgewandten Seite mit Anlenkungen (15, 16) für die Arme (13, 14) der Querversteifung (4) versehen sind.

4. Hilfsrahmen nach einem der vorhergehenden Ansprüche,
**dadurch gekennzeichnet,**
**daß** die Seitenteile (2) und der obere Querträger (3) eine unlösbare Baueinheit bilden.

5. Hilfsrahmen nach einem der vorhergehenden Ansprüche,
**dadurch gekennzeichnet,**
**daß** die flächige untere Querversteifung (4) lösbar mit der durch Seitenteile (2) und Querträger (3) gebildeten Baueinheit verbunden sind.

6. Hilfsrahmen nach einem der vorhergehenden Ansprüche,
**dadurch gekennzeichnet,**
**daß** die Auskröpfungen (12) der Seitenteile nach oben, unten oder nach der Seite gerichtet sind.

7. Hilfsrahmen nach einem der vorhergehenden Ansprüche,
**dadurch gekennzeichnet,**
**daß** der obere Querträger (3) als im Querschnitt U-förmige Schiene ausgebildet ist.

8. Hilfsrahmen nach Anspruch 7,
**dadurch gekennzeichnet,**
**daß** die Schenkel des oberen Querträgers (3) sich gegen die untere Querversteifung (4) erstrecken.

9. Hilfsrahmen nach einem der vorhergehenden Ansprüche,
**dadurch gekennzeichnet,**
**daß** die bezogen auf die Fahrzeuglängsrichtung rückwärtigen Arme (14) der unteren Querversteifung (4) im wesentlichen in Verlängerung der quer verlaufenden, rückwärtigen Begrenzung des taillierten Mittelbereiches liegen.

10. Hilfsrahmen nach Anspruch 9,
**dadurch gekennzeichnet,**
**daß** die bezogen auf die Fahrzeuglängsrichtung vorderen Arme (13) der unteren Querversteifung (4) ausgehend von deren Mittelbereich schräg nach vorne und außen verlaufen..

11. Hilfsrahmen nach einem der vorhergehenden Ansprüche,
**dadurch gekennzeichnet,**
**daß** der obere Querhägar (3) bezogen auf die Fahrzeuglängsrichtung in Draufsicht im wesentlichen zwischen der Vorderseite der unteren Querversteifung (4) in deren Mittelbereich und den Anlenkungen von deren schräg nach vorne außen ragenden Armen (13) an den Seitenteilen (2) liegt.

12. Hilfsrahmen nach einem der vorhergehenden Ansprüche,
**dadurch gekennzeichnet,**
**daß** die über die Radführungsglieder geführten Räder (19) lenkbar sind und die untere Querversteifung (4) eine Montageplattform für die Lenkung bildet.

13. Hilfsrahmen nach Anspruch 12,
**dadurch gekennzeichnet,**
**daß** die Lenkung eine Führung (20) für in Fahrzeugquerrichtung verschiebbare Lenkstangen (21) aufweist und daß das die Lenkstangenführung (20) bildende Gehäuse in Höhenrichtung zwischen oberem Querträger (3) und unterer Querversteifung (4) liegt und mit diesen verbunden ist.

14. Hilfsrahmen nach Anspruch 12 oder 13,
**dadurch gekennzeichnet,**
**daß** oberer Querträger (3) und untere Querversteifung (4) durch ihre Befestigung an der Lenkstangenführung (20) gegeneinander abgestützt sind.

15. Hilfsrahmen nach einem der vorhergehenden Ansprüche,
**dadurch gekennzeichnet,**
**daß** die plattenförmige, untere Querversteifung (4) als Profilkörper mit in Querrichtung verlaufenden Verrippungen ausgebildet ist.

## Claims

1. Auxiliary frame (1) for motor vehicles, in particular for front axles of passenger vehicles, with independent wheel suspension and wheels (19) controlled by upper and lower wheel control elements, in which the upper and lower wheel control elements co-operate with upper and lower bearings on and in the region of side parts (2) of the auxiliary frame (1) which extend in the vehicle longitudinal direction and are provided with brackets having a curved contour with end portions to provide a removable attachment to the body or frame of the vehicle and projecting downwards to support bearings (17,18) for the lower wheel control members, being connected by transverse elements, one of which forms a top cross-member (3) and one of which forms a bottom cross-brace (4), the latter being of a plate-shaped flat design and disposed on a level with the bearings (17, 18) of the lower wheel control members between the brackets supporting these bearings (17, 18),
**characterised in that**
the side parts (2) have a middle piece (11) joining offsets (12) from their end portions constituting deformation regions and can be shortened under the effect of longitudinal force, **in that** the top cross-member (3) is joined to the side parts (2) in the region of the middle pieces (11) and the bottom cross-brace (4) has a narrowed middle region towards the vehicle longitudinal midplane (5) as seen in plan view and, adjoining this, has arms (13, 14) extending away from one another towards the end portions of the side parts (2) and joined thereto.

2. Auxiliary frame as claimed in claim 11,
**characterised in that**
the arms (13, 14) are attached to the brackets of the side parts (2) co-operating with the end portions adjacent to the bearings (17, 18) of the lower wheel control members.

3. Auxiliary frame as claimed in claim 1 or 2,
**characterised in that**
on their side remote from the wheel control members, the brackets are provided with points of attachment (15, 16) for the arms (13, 14) of the cross-brace (4).

4. Auxiliary frame as claimed in one of the preceding claims,
**characterised in that**
the side parts (2) and the top cross beam (3) form a non-detachable unit.

5. Auxiliary frame as claimed in one of the preceding claims,
**characterised in that**
the flat, bottom cross-brace (4) is removably joined to the unit formed by the side parts (2) and cross-beam (3).

6. Auxiliary frame as claimed in one of the preceding claims,
**characterised in that**
the offsets (12) of the side parts are directed upwards, downwards or to the side.

7. Auxiliary frame as claimed in one of the preceding claims,
**characterised in that**
the top cross-beam (3) is designed as a U-shaped rail in cross section.

8. Auxiliary frame as claimed in claim 7,
**characterised in that**
the legs of the top cross-beam (3) extend towards the bottom cross-brace (4).

9. Auxiliary frame as claimed in one of the preceding claims,
**characterised in that**
the rearward arms (14), relative to the vehicle longitudinal direction, of the lower cross-brace (4) essentially lie in the extension of the transversely extending rearward boundary of the narrowed middle region.

10. Auxiliary frame as claimed in claim 9,
**characterised in that**
the front arms (13), relative to the vehicle longitudinal direction, of the lower cross-brace (4) extend forwards and outwards at an angle from the middle region thereof.

11. Auxiliary frame as claimed in one of the preceding claims,
**characterised in that**
the top cross-beam (3) lies, relative to the vehicle longitudinal direction as seen in plan view, substantially between the front face of the bottom cross-brace (4) in the middle region thereof and the attachment points to the side parts (2) of forwardly and outwardly projecting arms (13) thereof.

12. Auxiliary frame as claimed in one of the preceding claims,
**characterised in that**
the wheels (19) controlled by the wheel control members are steerable and the bottom cross-brace (4) forms a mounting platform for the steering system.

13. Auxiliary frame as claimed in claim 12,
**characterised in that**
the steering system has a guide (20) for steering rods (21) displaceable in the vehicle transverse direction and the housing forming the steering rod guide (20) lies between the top cross-beam (3) and bottom cross-brace (4) in the height direction and is connected to them.

14. Auxiliary frame as claimed in claim 12 or 13,
**characterised in that**
top cross-beam (3) and bottom cross-brace (4) are supported relative to one another by means of their attachment to the steering rod guide (20).

15. Auxiliary frame as claimed in one of the preceding claims,
**characterised in that**
the plate-shaped, bottom cross-brace (4) is provided in the form of a profiled element having ribbing extending in the transverse direction.

## Revendications

1. Châssis auxiliaire (1) pour véhicules automobiles, en particulier pour les essieux avant d'automobiles particulières, comportant des suspensions de roues indépendantes et des roues (19) dirigées via des organes directeurs de roue supérieur et inférieur, suspension dans laquelle des paliers supérieur et inférieur prévus dans la région des pièces latérales (2) du châssis auxiliaire (1) qui s'étend dans la direction longitudinale du véhicule sont associés aux organes directeurs de roue supérieur et inférieur, destinées à être fixées de manière détachable par rapport à la superstructure au châssis du véhicule vers le tracé incurvé dans la région de leurs tronçons terminaux et pourvues de consoles en dépassement vers le bas et portant des paliers (17, 18) pour les organes directeurs de roue inférieurs, lesdites consoles étant reliées par des éléments transversaux, l'un de ces éléments formant un support transversal supérieur (3) et un autre formant un raidissement transversal inférieur (4), ce dernier étant agencé, avec une réalisation à plat en forme de plaque à la hauteur des paliers (17, 18) des organes directeurs de roue inférieurs, entre les consoles qui portent ces paliers (17, 18), **caractérisé en ce que** les pièces latérales (2) comprennent une partie médiane (11) reliée vis-à-vis de leurs tronçons terminaux via des coudages (12) formant des zones de déformation, et susceptibles d'être raccourcis sous l'influence de forces longitudinales, **en ce que** le support transversal supérieur (3) est relié aux pièces latérales (2) dans la région des parties médianes (11), et ce que le raidissement transversal inférieur (4) comprend une zone médiane rétrécie en vue de dessus vers le plan médian longitudinal (5) du véhicule et à la suite de celui-ci des bras (13, 14) divergeant l'un de l'autre vers les tronçons terminaux des pièces latérales (2) et reliés à ceux-ci.

2. Châssis auxiliaire selon la revendication 1, **caractérisé en ce que** les bras (13, 14) sont fixés, au voisinage des paliers (17, 18) des organes directeurs de roue inférieurs, sur les consoles des pièces latérales (2) associée aux tronçons terminaux.

3. Châssis auxiliaire selon l'une ou l'autre des revendications 1 et 2, **caractérisé en ce que** les consoles sont dotées, sur leur côté détourné des organes directeurs de roue, d'articulations (15, 16) pour les bras (13, 14) de la rigidification transversale (4).

4. Châssis auxiliaire selon l'une des revendications précédentes, **caractérisé en ce que** les pièces latérales (2) et le support transversal supérieur (3) forment une unité structurelle indétachable.

5. Châssis auxiliaire selon l'une des revendications précédentes, **caractérisé en ce que** la rigidification transversale inférieure plane (4) est reliée de manière détachable avec l'unité structurelle formée par les pièces latérales (2) et le support transversal (3).

6. Châssis auxiliaire selon l'une des revendications précédentes, **caractérisé en ce que** les coudages (12) des pièces latérales sont orientés vers le haut, vers le bas ou vers le côté.

7. Châssis auxiliaire selon l'une des revendications précédentes, **caractérisé en ce que** le support transversal supérieur (3) est réalisé sous forme d'un rail à section transversale en forme de U.

8. Châssis auxiliaire selon la revendication 7, **caractérisé en ce que** les branches du support transversal supérieur (3) s'étendent contre la rigidification transversale inférieure (4).

9. Châssis auxiliaire selon l'une des revendications précédentes, **caractérisé en ce que** les bras (14), postérieurs en se référant à la direction longitudinale du véhicule, de la rigidification transversale inférieure (4) sont disposés sensiblement dans le prolongement de la délimitation transversale postérieure de la zone médiane en rétrécissement.

10. Châssis auxiliaire selon la revendication 9, **caractérisé en ce que** les bras (13), antérieurs en se référant à la direction longitudinale du véhicule, de la rigidification transversale inférieure (4) s'étendent en oblique vers l'avant et vers l'extérieur en partant de leur zone médiane.

11. Châssis auxiliaire selon l'une des revendications précédentes, **caractérisé en ce que** le support transversal supérieur (3) est disposé en vue de dessus, lorsqu'on se réfère à la direction longitudinale du véhicule, sensiblement entre le côté antérieur de la rigidification transversale inférieure (4) dans sa zone médiane et les articulations de leurs bras (13), dépassant en oblique vers l'avant et vers l'extérieur, sur les pièces latérales (2).

12. Châssis auxiliaire selon l'une des revendications précédentes, **caractérisé en ce que** les roues (19) dirigées au moyen des organes directeurs de roue sont des roues directrices, et **en ce que** la rigidification transversale (4) forme une plate-forme de montage pour le système de direction.

13. Châssis auxiliaire selon la revendication 12, **caractérisé en ce que** le système de direction comprend un guidage (20) pour des bras de direction (21) en translation en direction transversale par rapport au véhicule, et **en ce que** le boîtier qui forme le guidage (20) pour les bras de direction est disposé, en direction verticale, entre le support transversal supérieur (3) et la rigidification transversale inférieure (4), et est relié à ceux-ci.

14. Châssis auxiliaire selon l'une ou l'autre des revendications 12 et 13, **caractérisé en ce que** le support transversal supérieur (3) et la rigidification transversale inférieure (4) sont soutenus l'un contre l'autre au moyen de leur fixation sur le guidage (20) des bras de direction.

15. Châssis auxiliaire selon l'une des revendications précédentes, **caractérisé en ce que** la rigidification transversale inférieure (4) en forme de plaque est réalisée sous la forme d'un corps profilé avec des nervures qui s'étendent en direction transversale.
